# EUROPEAN PATENT SPECIFICATION

(11) **EP 4 636 263 B1**
(45) Date of publication and mention of the grant of the patent: **31.12.2025**
(21) Application number: 25169731.4
(22) Date of filing: 10.04.2025
(51) Int. Cl.: F16B 2/10, F16B 31/02

(54) **VISUAL TIGHTENING TORQUE INDICATOR**
VISUELLER FESTZIEHDREHMOMENTANZEIGER
INDICATEUR DE COUPLE DE SERRAGE VISUEL

(30) Priority: 16.04.2024 US 202418636518
(43) Date of publication of application: 22.10.2025
(73) Proprietor: Krausz Industries Ltd., 4850001 Rosh HaAyin (IL)
(72) Inventor: Yamin, Bar, 4853309 Rosh Haayin (IL); Ryvzh, Sergey, 7558305 Rishon LeZion (IL)
(74) Representative: Becker Kurig & Partner Patentanwälte mbB

(56) References cited:
- WO-A1-2021/211356
- DE-C- 394 720
- KR-A- 20060 006 111

## Description

### FIELD OF THE INVENTION

The present invention relates generally to pipe couplings and clamp assemblies, and particularly to a fastener washer assembly and a clamp assembly with a visual tightening torque indicator.

### BACKGROUND OF THE INVENTION

Many pipe clamp assemblies (also referred to as fittings assemblies, the terms being used interchangeably throughout) use threaded fasteners to tighten a clamp or band around a pipe. The fasteners must be tightened by an amount of torque so that proper sealing of the pipe clamp assembly is achieved and the fasteners remain fastened under various types of loading conditions.

The threaded fasteners can be tightened with a torque wrench, which indicates that the proper torque has been reached. However, there are many situations on site that make it inconvenient or cumbersome to use a torque wrench. Therefore, it would be desirable to have some indication of the tightening torque without the need for a torque wrench.

A known clamp assemblies is described in DE 394 720 C relating to a device for indicating a screw pressure against a base by means of which all screws can be tightened evenly, in which a coil spring is arranged between a nut and the base around a screw bolt, with ends resting against telescopically sliding sleeves. One sleeve indicates the spring tension and thus the screw pressure by means of pointers formed on it, which can be read on a scale on the other sleeve.

### SUMMARY OF THE INVENTION

The present invention seeks to provide a clamp assembly with a visual tightening torque indicator, as is described more in detail hereinbelow. Unlike torque indicators that are part of the threaded fastener or on the tool (such as a torque wrench), in the present invention, the torque indicator is part of a washer assembly used with threaded fasteners and is independent of the threaded fastener or the tool.

The present invention is defined in appended claim 1. Beneficial embodiments are provided in the dependent claims. The following disclosure serves a better understanding of the present invention. There is thus provided in accordance with an embodiment of the present invention a fastener washer assembly including a first member including one or more visual indicators and a second member formed with one or more windows, and a biasing device placed between the first member and the second member that provides a biasing force that urges the first member and the second member to move away from each other, and wherein the one or more visual indicators are movable to a position so as to be visible through the one or more windows when a fastener coupled to the first and second members is tightened to a predetermined torque that overcomes the biasing force.

The first member includes a planar plate that has a central hole formed therethrough, and an inner skirt and an outer rim, both of which extend from the planar plate towards the second member, there being a gap between the inner skirt and the outer rim, and wherein an outer perimeter of the inner skirt includes the one or more visual indicators and the outer rim does not block viewing the one or more visual indicators.

In accordance with a non-limiting embodiment of the present invention the second member includes a planar plate that has a central hole formed therethrough, and an outer rim extends from the planar plate towards the first member, and wherein the one or more windows are formed through the outer rim.

In accordance with a non-limiting embodiment of the present invention the biasing device is placed inwards of the inner rim.

In accordance with a non-limiting embodiment of the present invention first and second washer plates of the fastener washer assembly are affixed to outer surfaces of the first and second members, respectively.

In accordance with a non-limiting embodiment of the present invention there is also provided a clamp assembly including two curved resilient band halves terminating in two clamp members, and a threaded fastener tightenable by a nut for fastening the clamp members towards each other so as to apply a radially-inward clamping force, wherein the threaded fastener is coupled to the fastener washer assembly and tightening of the threaded fastener with the nut is indicated by the one or more visual indicators being moved to the position so as to be visible through the one or more windows.

### BRIEF DESCRIPTION OF THE DRAWINGS

The present invention will be understood and appreciated more fully from the following detailed description, taken in conjunction with the drawing in which:
Fig. 1 is a simplified pictorial illustration of a fastener washer assembly with a torque indicator, constructed and operative in accordance with a non-limiting embodiment of the present invention.
Fig. 2 is a side view of the fastener washer assembly.
Fig. 3 is a sectional view of the fastener washer assembly, taken along lines A-A in Fig. 2.
Figs. 4A and 4B are side and sectional views, respectively, of the fastener washer assembly before reaching the required tightening torque, with Fig. 4B taken along lines B-B in Fig. 4A.
Figs. 4C and 4D are side and sectional views, respectively, of the fastener washer assembly after reaching the required tightening torque, with Fig. 4D taken along lines D-D in Fig. 4C.
Fig. 5 is a simplified pictorial illustration of a clamp assembly that uses the fastener washer assembly with the torque indicator, constructed and operative in accordance with a non-limiting embodiment of the present invention.
Fig. 6 is a side view of the clamp assembly.
Fig. 7 is an enlarged view of the fastener washer assembly in the clamp assembly.

### DETAILED DESCRIPTION OF EMBODIMENTS

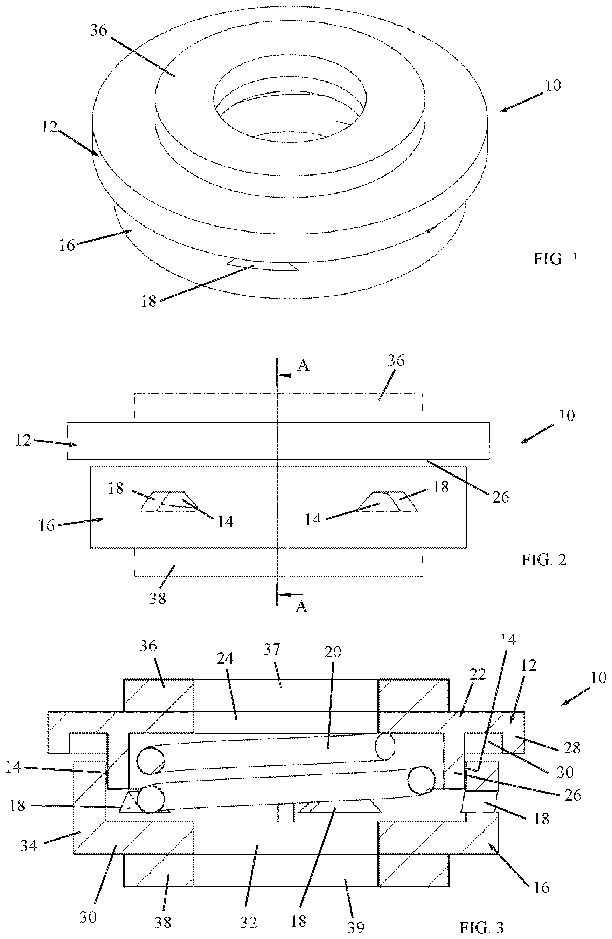

Reference is now made to Figs. 1-3, which illustrate a fastener washer assembly 10 with a torque indicator, constructed and operative in accordance with a non-limiting embodiment of the present invention.

The fastener washer assembly 10 may include a first member 12 that includes one or more visual indicators 14 and a second member 16 formed with one or more windows 18 through which the one or more visual indicators 14 are visible upon reaching a certain tightening torque. A biasing device 20, such as a coil spring, leaf spring or others, may be placed between first member12 and second member 16.

Reference is made particularly to Fig. 3. The first member 12 may include a planar plate 22, which typically is circular as is usual for washers, but can be hexagonal or other shapes. A central hole 24 may be formed through planar plate 22. An inner skirt 26 may extend from planar plate 22 towards second member 16. The inner skirt 26 may be shaped as a ring, particularly if planar plate 22 is circular, but again other shapes may be used as well. The inner skirt 26 does not have to be 360° and can be a partial skirt or a skirt with gaps. The outer perimeter of inner skirt 26 includes the one or more visual indicators 14.

The one or more visual indicators 14 may be a color, knurling, engraved symbols or any kind of marking, and any combination thereof, which is painted, coated, machined, molded, or otherwise disposed on inner skirt 26. An outer rim 28 may extend from planar plate 22 towards second member 16. There is a gap 30 between inner skirt 26 and outer rim 28. Outer rim 28 does not block viewing any visual indicator 14. For example, outer rim 28 may be shorter in its protruding length than inner skirt so that outer rim 28 does not block viewing any visual indicator 14. As another example, outer rim 28 may be provided with openings that permit seeing the visual indicator 14.

The second member 16 may include a planar plate 30, which typically is circular, as is usual for washers, but can be hexagonal or other shapes. A central hole 32 may be formed through planar plate 30. An outer rim 34 may extend from planar plate 30 towards first member 12. The one or more windows 18 may be formed through outer rim 34.

As seen in Fig. 3, the biasing device 20 may be placed inwards of inner rim 26 and exerts a biasing (spring) force on the inner faces of the planar plates of first member 12 and second member 16.

As seen in Fig. 3, there may be optionally provided first and second washer plates 36 and 38 affixed to the outer surfaces of the planar plates of first member 12 and second member 16, respectively. The first and second washer plates 36 and 38 may be sized to accommodate heads of threaded fasteners. The first and second washer plates 36 and 38 may be formed with holes 37 and 39, respectively. The central holes of the washer plates and the planar plates of first member 12 and second member 16 are sized so that the shank of a threaded fastener can pass through them.

The fastener washer assembly 10 may be made of any suitable metal or other material, depending on the application.

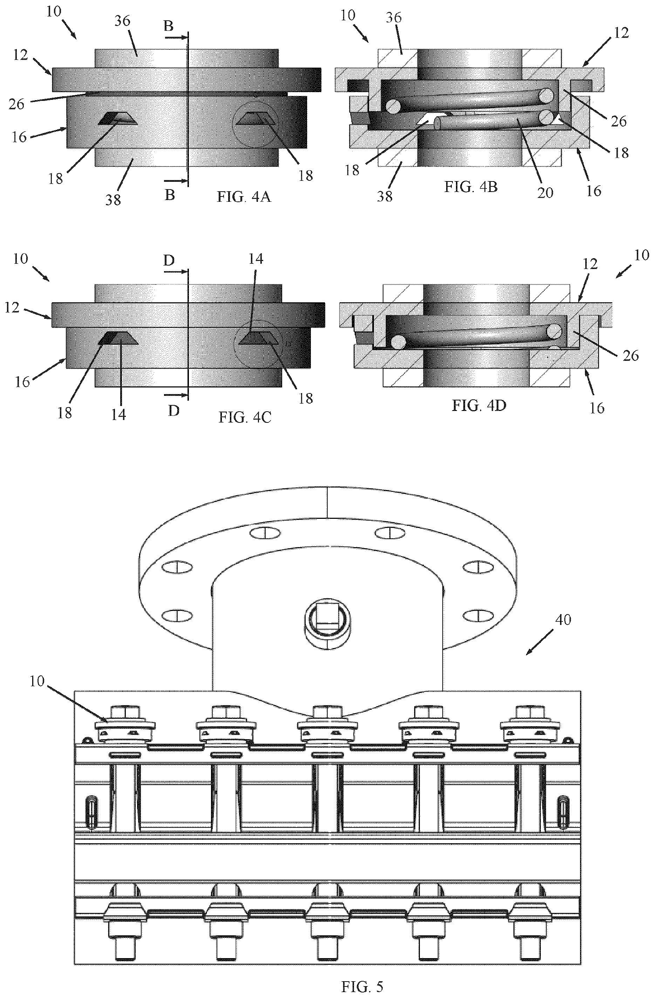

Reference is now made to Figs. 4A and 4B, which illustrate the fastener washer assembly 10 before reaching the required tightening torque. The first member 12 is slightly nested in second member 16, and the windows 18 are clear. The biasing device 20 (Fig. 4B) provides a biasing force that urges the first member 12 and the second member 16 to move away from each other.

Reference is now made to Figs. 4C and 4D, which illustrate the fastener washer assembly 10 after reaching the required tightening torque. The first member 12 is fully nested in second member 16, and the visual indicators 14 are visible in windows 18. Accordingly, the visual indicators 14 are movable to a position so as to be visible through windows 18 when a fastener coupled to first and second members 12 and 16 is tightened to a predetermined torque that overcomes the biasing force of the biasing device. The full appearance of the visual indicator in window 18 provides the user a visual indication that the required torque has been reached. The amount that visual indicator appears in window 18 is also an indication of the torque; if visual indicator does not completely appear in window 18, this indicates that the fastener has been tightened but has not yet reached the required torque.

Reference is now made to Figs. 5-7, which illustrate a clamp assembly 40 that uses the fastener washer assembly 10 with the torque indicator 14, constructed and operative in accordance with a non-limiting embodiment of the present invention.

Clamp assembly 40 includes two curved resilient band halves 42 and 44 terminating in two clamp members 46 and 48. It is appreciated that the invention is not limited to just two band halves - the patent can be carried out with more than two and the term two halves is to be understood as encompassing any number of partial shapes which are referred to as "halves". The resilient band halves 42 and 44 are adapted to receive therein a cylindrical or ring elastomeric seal 50 that contacts an outer contour of a pipe (not shown). One or more fasteners, such as bolts or screws 52 secured by nuts 54, fasten the clamp members 46 and 48 towards each other so as to apply a radially-inward clamping force on the elastomeric seal 50 that contacts the pipe so that the clamp assembly 40 clamps the pipe.

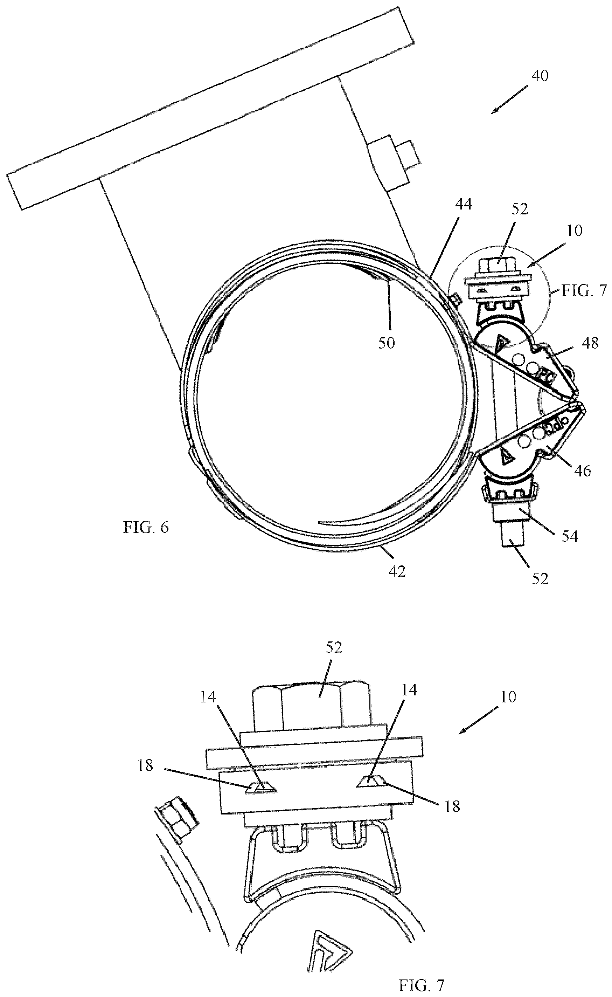

As seen best in Fig. 6, the bolt 52 passes through the fastener washer assembly 10. The shank of bolt 52 is sized to pass through the central openings of the fastener washer assembly 10. The head of bolt 52 rests against the first washer plate 36. The end of the shank of bolt 52 passes through clamp member 46 and is tightened by tightening nut 54. As seen in Fig. 7, the tightening of the threaded fastener to the required torque is indicated by visual indicator 14 in window 18 of the fastener washer assembly 10, as described above.

## Claims

1. A fastener washer assembly (10) comprising:
a first member (12) comprising one or more visual indicators (14) and a second member (16) formed with one or more windows (18); and
a biasing device (20) placed between said first member (12) and said second member (16) that provides a biasing force that urges said first member (12) and said second member (16) to move away from each other, and wherein said one or more visual indicators (14) are movable to a position so as to be visible through said one or more windows (18) when a fastener coupled to said first and second members (12, 16) is tightened to a predetermined torque that overcomes said biasing force,
wherein
said first member (12) comprises a planar plate (22) that has a central hole (24) formed therethrough, and an inner skirt (26) and an outer rim (28), both of which extend from said planar plate (22) towards said second member (16), there being a gap (30) between said inner skirt (26) and said outer rim (28), and wherein an outer perimeter of said inner skirt (26) comprises said one or more visual indicators (14) and said outer rim (28) does not block viewing said one or more visual indicators (14).

2. The fastener washer assembly (10) according to claim 1, wherein said second member (16) comprises a planar plate (30) that has a central hole (32) formed therethrough, and an outer rim (34) extends from said planar plate (30) towards said first member (12), and wherein said one or more windows (18) are formed through said outer rim (34).

3. The fastener washer assembly (10) according to claim 1, wherein said biasing device (20) is placed inwards of said inner skirt (26).

4. The fastener washer assembly (10) according to claim 1, further comprising first and second washer plates (36, 38) affixed to outer surfaces of said first and second members (12, 16), respectively.

5. The fastener washer assembly (10) according to claim 1, further comprising a clamp assembly (40) comprising two curved resilient band halves (42, 44) terminating in two clamp members (46, 48), and a threaded fastener (52) tightenable by a nut (54) for fastening said clamp members (46, 48) towards each other so as to apply a radially-inward clamping force, wherein said threaded fastener (52) is coupled to said fastener washer assembly (10) and tightening of said threaded fastener (52) with said nut (54) is indicated by said one or more visual indicators (14) being moved to the position so as to be visible through said one or more windows (18).

## Patentansprüche

1. Befestigungsscheibenanordnung (10), umfassend:
ein erstes Element (12), umfassend einen oder mehrere visuelle Indikatoren (14) und ein zweites Element (16), das mit einem oder mehreren Fenstern (18) ausgebildet ist; und
eine Vorspannvorrichtung (20), die zwischen dem ersten Element (12) und dem zweiten Element (16) platziert ist und die eine Vorspannkraft bereitstellt, die das erste Element (12) und das zweite Element (16) voneinander wegdrückt, und wobei der eine oder die mehreren visuellen Indikatoren (14) in eine Position bewegbar sind, in der sie durch das eine oder die mehreren Fenster (18) sichtbar sind, wenn ein mit dem ersten und dem zweiten Element (12, 16) gekoppeltes Befestigungselement mit einem vorbestimmten Drehmoment angezogen wird, das die Vorspannkraft überwindet, wobei
das erste Element (12) eine ebene Platte (22) mit einem durch diese hindurch ausgebildeten zentralen Loch (24) und einer inneren Schürze (26) und einem äußeren Rand (28) umfasst, die sich beide von der ebenen Platte (22) in Richtung des zweiten Elements (16) erstrecken, wobei zwischen der inneren Schürze (26) und dem äußeren Rand (28) ein Spalt (30) vorhanden ist und wobei ein Außenumfang der inneren Schürze (26) den einen oder die mehreren visuellen Indikatoren (14) umfasst und der äußere Rand (28) die Sicht auf den einen oder die mehreren visuellen Indikatoren (14) nicht behindert.

2. Befestigungsscheibenanordnung (10) gemäß Anspruch 1, wobei das zweite Element (16) eine ebene Platte (30) umfasst mit einem durch diese hindurch ausgebildeten zentralen Loch (32), und wobei sich ein äußerer Rand (34) von der ebenen Platte (30) in Richtung des ersten Elements (12) erstreckt, und wobei das eine oder die mehreren Fenster (18) durch den äußeren Rand (34) ausgebildet sind.

3. Befestigungsscheibenanordnung (10) gemäß Anspruch 1, wobei die Vorspannvorrichtung (20) innerhalb der inneren Schürze (26) angeordnet ist.

4. Befestigungsscheibenanordnung (10) gemäß Anspruch 1, ferner umfassend eine erste und eine zweite Scheibenplatte (36, 38), die jeweils an Außenflächen des ersten und des zweiten Elements (12, 16) befestigt sind.

5. Befestigungsscheibenanordnung (10) gemäß Anspruch 1, ferner umfassend eine Klemmanordnung (40), die zwei gekrümmte elastische Bandhälften (42, 44) umfasst, die in zwei Klemmelementen (46, 48) enden, sowie ein Gewindebefestigungselement (52), das durch eine Mutter (54) festgezogen werden kann, um die Klemmelemente (46, 48) aneinander zu befestigen, um eine radial nach innen gerichtete Klemmkraft auszuüben, wobei das Gewindebefestigungselement (52) mit der Befestigungsscheibenanordnung (10) gekoppelt ist und das Anziehen des Gewindebefestigungselements (52) mit der Mutter (54) dadurch angezeigt wird, dass der eine oder die mehreren visuellen Indikatoren (14) in eine Position bewegt werden, in der sie durch das eine oder die mehreren Fenster (18) sichtbar sind.

## Revendications

1. Un ensemble (10) formant rondelle de fixation comprenant :
un premier élément (12), comprenant un ou plusieurs indicateurs visuels (14) et un deuxième élément (16) formé avec une ou plusieurs fenêtres (18) ; et
un dispositif de sollicitation (20), placé entre ledit premier élément (12) et ledit deuxième élément (16) qui fournit une force de sollicitation qui pousse ledit premier élément (12) et ledit deuxième élément (16) à s'éloigner l'un de l'autre, et dans lequel lesdits un ou plusieurs indicateurs visuels (14) sont mobiles vers une position de manière à être visibles à travers lesdites une ou plusieurs fenêtres (18) lorsqu'un organe de fixation relié auxdits premier et deuxième éléments (12, 16) est serré selon un couple prédéterminé qui surmonte ladite force de sollicitation,
ledit premier élément (12) comprend une plaque plane (22), qui présente un trou central (24) formé à travers elle, et une jupe intérieure (26) et un rebord extérieur (28), qui s'étendent tous deux depuis ladite plaque plane (22) vers ledit deuxième élément (16), un espace (30) étant prévu entre ladite jupe intérieure (26) et ledit rebord extérieur (28), et dans lequel un périmètre extérieur de ladite jupe intérieure (26) comprend lesdits un ou plusieurs indicateurs visuels (14) et ledit rebord extérieur (28) ne bloque pas la vue dudit ou desdits indicateurs visuels (14).

2. L'ensemble (10) formant rondelle de fixation selon la revendication 1, dans lequel ledit deuxième élément (16) comprend une plaque plane (30), qui présente un trou central (32) formé à travers elle, et un rebord extérieur (34) s'étend depuis ladite plaque plane (30) vers ledit premier élément (12), et dans lequel lesdites une ou plusieurs fenêtres (18) sont formées à travers ledit rebord extérieur (34).

3. L'ensemble (10) formant rondelle de fixation selon la revendication 1, dans lequel ledit dispositif de sollicitation (20) est placé à l'intérieur de ladite jupe intérieure (26).

4. L'ensemble (10) formant rondelle de fixation selon la revendication 1, comprenant en outre des première et deuxième plaques de rondelle (36, 38) fixées respectivement à des surfaces extérieures desdits premier et deuxième éléments (12, 16).

5. L'ensemble (10) formant rondelle de fixation selon la revendication 1, comprenant en outre un ensemble de serrage (40) comprenant deux moitiés de bande élastique incurvées (42, 44) se terminant par deux éléments de serrage (46, 48), et un organe de fixation fileté (52) apte à être serré par un écrou (54) pour fixer lesdits éléments de serrage (46, 48) l'un vers l'autre de manière à appliquer une force de serrage radiale vers l'intérieur, ledit organe de fixation fileté (52) étant relié audit ensemble formant rondelle de fixation (10) et le serrage dudit organe de fixation fileté (52) avec ledit écrou (54) est indiqué par lesdits un ou plusieurs indicateurs visuels (14), qui sont déplacés vers la position de manière à être visibles à travers lesdites une ou plusieurs fenêtres (18).
